# EUROPÄISCHE PATENTANMELDUNG

(11) **EP 2 068 115 A1**
(43) Veröffentlichungstag der Anmeldung: **10.06.2009**
(21) Anmeldenummer: 07122598.1
(22) Anmeldetag: 07.12.2007
(51) Int. Cl.: G01C 15/00

(54) **Verfahren zur Bestimmung eines Messpunktes im Gelände**

(71) Anmelder: Lehmann, Nicolas, 8605 Gutenswil (CH); Lehmann, Richard, 8320 Fehraltorf (CH)
(72) Erfinder: Lehmann, Nicolas, 8605 Gutenswil (CH); Lehmann, Richard, 8320 Fehraltorf (CH)
(74) Vertreter: Troesch Scheidegger Werner AG

(57) **Zusammenfassung**

Die Erfindung betrifft ein Verfahren zum Bestimmen eines Messpunktes (M) im Gelände unter Verwendung eines Messgerätes (1) mit Winkelvorgabeeinstellmöglichkeit. Das Verfahren darin besteht, dass ein Messpunkt (M) in das Messgerät (1) eingegeben wird, wobei der Messpunkt (M) zu einem bekannten Punkt (P) in Bezug steht, dass in Bezug auf den Messpunkt (M) ein Horizontalwinkel (α) bestimmt wird, dass der bestimmte Horizontalwinkel (α) am Messgerät (1) eingestellt wird, dass in Bezug auf den Messpunkt (M) ein Vertikalwinkel (β) bestimmt wird und dass der Vertikalwinkel (β) am Messgerät (1) eingestellt wird. Das Verfahren hat den Vorteil, dass der Messpunkt (M) gegenüber bekannten Verfahren wesentlich schneller und einfacher in der Bedienung ist.

## Beschreibung

Die vorliegende Erfindung betrifft ein Verfahren zur Bestimmung eines Messpunktes im Gelände unter Verwendung eines Messgerätes mit Winkeleinstellmöglichkeit.

Messgeräte, wie Theodoliten mit oder ohne integriertem Distanzmessgerät, werden auf Baustellen zum exakten Einmessen von zu bauenden Gebäudeteilen eingesetzt. Nach der Eingabe eines abzusteckenden Punktes, im folgenden Messpunkt genannt, errechnet das Messgerät aufgrund dessen Position einen Horizontalwinkel. Gleichzeitig wird ein ebenfalls berechnetes Horizontalmass bestimmt, wobei jedoch vorab nicht bekannt ist, wo sich das Horizontalmass auf der eingestellten Vertikalwinkelachse befindet. Aus diesem Grund müssen meist mehrere Distanzmessungen unter Zuhilfenahme einer Hilfsperson vorgenommen werden, was entsprechend zeitaufwändig ist.

Die Aufgabe der vorliegenden Erfindung besteht daher darin, ein Verfahren zur Bestimmung eines Messpunktes im Gelände anzugeben, wobei das Verfahren gegenüber herkömmlichen Vorgehensweisen vereinfacht und damit kostengünstiger ist.

Diese Aufgabe wird durch die in Anspruch 1 angegebenen Massnahmen gelöst. Vorteilhafte Ausgestaltungen der Erfindung sind in weiteren Ansprüchen angegeben.

Die vorliegende Erfindung bezieht sich auf ein Verfahren zum Bestimmen eines Messpunktes im Gelände unter Verwendung eines Messgerätes mit Winkelvorgabeeinstellmöglichkeit. Erfindungsgemäss besteht das Verfahren darin,
- dass ein Messpunkt in das Messgerät eingegeben wird, wobei der Messpunkt zu einem bekannten Punkt in Bezug steht,
- dass in Bezug auf den Messpunkt ein Horizontalwinkel bestimmt wird,
- dass der bestimmte Horizontalwinkel am Messgerät eingestellt wird,
- dass in Bezug auf den Messpunkt ein Vertikalwinkel bestimmt wird und
- dass der Vertikalwinkel am Messgerät eingestellt wird.

Eine Ausführungsvariante des erfindungsgemässen Verfahrens besteht darin, dass das Messgerät im bekannten Punkt angeordnet wird.

Eine weitere Ausführungsvariante des erfindungsgemässen Verfahrens besteht darin, dass das Messgerät mit einer Höhendifferenz zum bekannten Punkt angeordnet wird.

Eine weitere Ausführungsvariante des erfindungsgemässen Verfahrens besteht darin, dass der Horizontalwinkel in Bezug auf den Messpunkt im Messgerät bestimmt wird.

Eine weitere Ausführungsvariante des erfindungsgemässen Verfahrens besteht darin, dass der Vertikalwinkel in Bezug auf den Messpunkt im Messgerät bestimmt wird.

Eine weitere Ausführungsvariante des erfindungsgemässen Verfahrens besteht darin, dass ein Höhenunterschied zwischen dem bekannten Punkt und dem Messpunkt in das Messgerät eingegeben wird.

Eine weitere Ausführungsvariante des erfindungsgemässen Verfahrens besteht darin, dass ein Höhenunterschied zwischen dem bekannten Punkt und dem Messpunkt durch das Messgerät gemessen wird.

Schliesslich besteht eine weitere Ausführungsvariante des erfindungsgemässen Verfahrens darin, dass der Horizontalwinkel und/oder der Vertikalwinkel automatisch durch das Messgerät eingestellt werden.

Die vorliegende Erfindung wird anhand von in Zeichnungen dargestellten Ausführungsbeispielen näher erläutert. Es zeigen:
- Fig. 1: eine Anordnung zur Illustration eines bekannten Verfahrens zum Bestimmen eines Messpunktes und
- Fig. 2: eine Anordnung zur Illustration eines erfindungsgemässen Verfahrens zum Bestimmen eines Messpunktes.

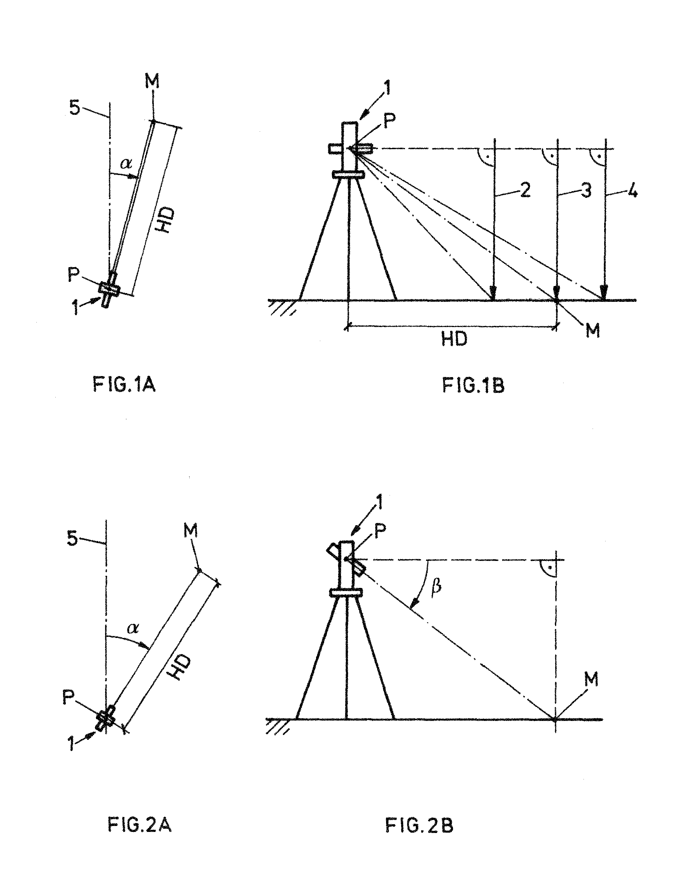

Fig. 1A zeigt in einer Draufsicht ein Messgerät 1, mit dem, ausgehend von einem dem Messgerät 1 bekannten Punkt P, ein Messpunkt M abgesteckt wird. Das Messgerät 1 (bzw. die Peilrichtung des Messgerätes 1) ist in Bezug auf eine Bezugsrichtung 5 um einen Horizontalwinkel α geschwenkt, der vorab und ausgehend vom bekannten Punkt P und vom Messpunkt M bestimmt worden ist. Aufgrund des bekannten Punktes P und des Messpunktes M ist auch eine Horizontaldistanz HD bekannt. Die Horizontaldistanz HD wird mit Hilfe eines Reflektors im Gelände abgesteckt, wobei hierzu eine Hilfsperson den Reflektor so lange verschiebt, bis die Bedienperson des Messgerätes 1 die gewünschte Horizontaldistanz HD am Messgerät 1 ablesen kann. In Fig. 1B ist dies schematisch durch die Positionen 2, 3 und 4 des Reflektors dargestellt, wobei die Position 3 des Reflektors die gewünschte Position aufweist. Nach jeder Änderung der Position der Hilfsperson muss eine Messung vorgenommen werden, aufgrund derer die Hilfsperson angewiesen wird, eine Korrektur der Position des Reflektors vorzunehmen. Die von der Bedienperson mit dem Messgerät 1 ermittelte und an die Hilfsperson übermittelte Positionskorrektur ist zwar genau, jedoch wird bzw. kann die Positionskorrektur von der Hilfsperson in der Regel nicht genau eingehalten werden, so dass weitere Messungen erforderlich sind.

Anhand der in Fig. 2A und 2B dargestellten Anordnung wird im Folgenden das erfindungsgemässe Verfahren zur Bestimmung eines Messpunktes M im Gelände unter Verwendung des Messgerätes 1 erläutert.

Mit P ist wiederum der dem Messgerät 1 bekannte Punkt und mit M der abzusteckende Messpunkt im Gelände bezeichnet. Wie beim bekannten Verfahren wird auch beim erfindungsgemässen Verfahren ein Horizontalwinkel α, ausgehend von einer Bezugsrichtung 5 unter Verwendung der Informationen zum bekannten Punkt P und zum abzusteckenden Messpunkt M, eingestellt. Damit ist die Richtung, in der der Messpunkt M liegt, vorgegeben.

Im Unterschied zum bekannten Ablauf, wie er anhand von Fig. 1B für das bekannten Verfahren beschrieben worden ist, wird beim erfindungsgemässen Verfahren ein Vertikalwinkel β ermittelt. Der Vertikalwinkel β wird beispielsweise aus der Horizontaldistanz HD und der Höhe des Punktes P über dem Punkt M berechnet. Damit zeigt das Messgerät 1 direkt auf den Messpunkt M, der abgesteckt werden soll. Da nun ein Kreuz in einer Optik des Messgerätes 1 den Punkt M anvisiert, kann die Hilfsperson direkt auf den Messpunkt M eingewiesen werden, was den Messvorgang bzw. das Bestimmen des Messpunktes M im Gelände sehr vereinfacht. Entsprechend können die Vermessungskosten durch das erfindungsgemässe Verfahren gegenüber einer Verwendung des bekannten Verfahrens reduziert werden.

In einer alternativen Ausführungsvariante der vorliegenden Erfindung kann auch mit einem Laserstrahl auf den abzusteckenden Punkt M gezeigt werden, wodurch dessen Ort direkt ersichtlich ist.

Aus Fig. 2B ist ersichtlich, dass der bekannte Punkt P und der abzusteckende Messpunkt M auf unterschiedlichen Horizontalebenen liegen.

Der Höhenunterschied zwischen dem bekannten Punkt P im Messgerät 1 und dem Messpunkt M wird zum Beispiel manuell in das Messgerät 1 eingegeben. Bei einer alternativen Ausführungsform wird der Höhenunterschied zwischen dem bekannten Punkt P und dem Messpunkt M mit Hilfe einer Distanzmessung ermittelt. Beispielsweise wird hierzu eine im Messgerät 1 integrierte Distanzmesseinheit verwendet.

In einer weiteren Ausführungsform der vorliegenden Erfindung werden der Horizontalwinkel α und/oder der Vertikalwinkel β im Messgerät 1 automatisch eingestellt, so dass ein manuelles Einstellen der besagten Winkel entfällt.

In einer weiteren Ausführungsform der vorliegenden Erfindung weist das Messgerät 1 eine Anzeigeeinheit auf, die dem Benutzer anzeigt, in welche Richtung der Vertikalwinkel β vergrössert bzw. verkleinert werden soll.

Bei einer noch weiteren Ausführungsvariante der vorliegenden Erfindung wird neben der zur richtigen Einstellung vorzunehmenden Richtung für den Vertikalwinkel β dem Benutzer zusätzlich eine Relativangabe angeboten, die ihm anzeigt oder andeutet, wie stark der Vertikalwinkel β, ausgehend von der momentanen Stellung in Bezug auf den gewünschten Vertikalwinkel β, noch zu ändern ist. Dies kann beispielsweise anhand einer Pfeilangabe auf der Anzeigeeinheit auf dem Messgerät 1 erfolgen: Während für kleine Vertikalwinkeländerungen ein kleiner Zeiger dargestellt wird, wird für grosse Vertikalwinkeländerungen ein grosser Zeiger dargestellt. In Abhängigkeit des momentan eingestellten Vertikalwinkels β ändert sich also auch der Zeiger, so dass der Benutzer bei jeder Veränderung ein einfach zu interpretierendes Rückmeldesignal erhält und den gewünschten Vertikalwinkel β schnell auf den richtigen Wert einstellen kann.

Andere Möglichkeiten, dem Benutzer des Messgerätes 1 ein einfaches Hilfsmittel zur schnellen und einfachen Vertikalwinkeleinstellung in die Hand zu geben, bestehen beispielsweise darin,
- dass ein Zahlenwert zwischen 1 und 10 auf der Anzeigeeinheit ersichtlich ist, wobei ein Wert 0 den richtigen Wert darstellt;
- dass ein Sprachsignal erzeugt wird, dass auf die noch vorzunehmende Änderungen aufmerksam macht, wie zum Beispiel "10° nach links"; oder
- dass ein auditives Signal erzeugt wird, wie zum Beispiel ein Pfeifton, der bei Annäherung an den richtigen Wert immer höher wird und bei Erreichen des richtigen Vertikalwinkelwertes abstellt.

## Patentansprüche

1. Verfahren zum Bestimmen eines Messpunktes (M) im Gelände unter Verwendung eines Messgerätes (1) mit Winkelvorgabeeinstellmöglichkeit, wobei das Verfahren darin besteht,
- dass ein Messpunkt (M) in das Messgerät (1) eingegeben wird, wobei der Messpunkt (M) zu einem bekannten Punkt (P) in Bezug steht,
- dass in Bezug auf den Messpunkt (M) ein Horizontalwinkel (α) bestimmt wird,
- dass der bestimmte Horizontalwinkel (α) am Messgerät (1) eingestellt wird,
- dass in Bezug auf den Messpunkt (M) ein Vertikalwinkel (β) bestimmt wird und
- dass der Vertikalwinkel (β) am Messgerät (1) eingestellt wird.

2. Verfahren nach Anspruch 1, **dadurch gekennzeichnet, dass** das Messgerät (1) im bekannten Punkt (P) angeordnet wird.

3. Verfahren nach Anspruch 1, **dadurch gekennzeichnet, dass** das Messgerät (1) mit einer Höhendifferenz zum bekannten Punkt (P) angeordnet wird.

4. Verfahren nach einem der Ansprüche 1 bis 3, **dadurch gekennzeichnet, dass** der Horizontalwinkel (α) in Bezug auf den Messpunkt (M) im Messgerät (1) bestimmt wird.

5. Verfahren nach einem der Ansprüche 1 bis 4, **dadurch gekennzeichnet, dass** der Vertikalwinkel (β) in Bezug auf den Messpunkt (M) im Messgerät (1) bestimmt wird.

6. Verfahren nach einem der Ansprüche 1 bis 5, **dadurch gekennzeichnet, dass** ein Höhenunterschied zwischen dem bekannten Punkt (P) und dem Messpunkt (M) in das Messgerät (1) eingegeben wird.

7. Verfahren nach einem der Ansprüche 1 bis 5, **dadurch gekennzeichnet, dass** ein Höhenunterschied zwischen dem bekannten Punkt (P) und dem Messpunkt (M) durch das Messgerät (1) gemessen wird.

8. Verfahren nach einem der Ansprüche 1 bis 7, **dadurch gekennzeichnet, dass** der Horizontalwinkel (α) und/oder der Vertikalwinkel (β) automatisch durch das Messgerät (1) eingestellt werden.
